# EUROPEAN PATENT APPLICATION

(11) **EP 4 729 399 A1**
(43) Date of publication of application: **22.04.2026**
(21) Application number: 25209011.3
(22) Date of filing: 15.10.2025
(51) Int. Cl.: B62D 53/12, B60D 1/62

(54) **TRACTOR-TRAILER COMBINATION WITH AUTOMATIC COUPLING OF LINES**

(30) Priority: 16.10.2024 NL 1044974
(71) Applicant: Van De Wetering, Martinus Theodorus, 5396 PB Lithoijen (NL)
(72) Inventor: Van De Wetering, Martinus Theodorus, 5396 PB Lithoijen (NL)
(74) Representative: Verhees, Godefridus Josephus Maria

(57) **Abstract**

The tractor 3 of a tractor-trailer combination 1 is equipped with a fifth wheel 7 and the semi-trailer 7 is equipped with a kingpin 9 that is coupled to the fifth wheel 7. The kingpin 9 is equipped with a marker 11, and the tractor 3 has a sensor 13 for determining the position of the marker 11 relative to the fifth wheel 7. The tractor 3 and the trailer 5 are equipped with lines 15 and 17 connected to coupling pieces 19 and 21. These coupling pieces are connected by a coupling device 23 during or after coupling the kingpin 9 to the fifth wheel 7. This coupling device 23 has coupling means 25 for connecting the coupling pieces if they are positioned directly or almost directly opposite each other, and displacement means 27 for bringing the coupling pieces straight or almost straight in front of each other.

## Description

### Technical field of the invention

The invention relates to a tractor-trailer combination, the tractor of which comprises a fifth wheel coupling and the trailer of which comprises a kingpin which can be coupled to the fifth wheel coupling and is provided with a marking on the underside, the tractor of which further comprises a sensor for determining the position of the marking relative to the fifth wheel coupling for the purpose of determining the relative angular position of the trailer relative to the tractor, and the tractor of which the trailer are provided with lines which are connected to coupling pieces which are connected to each other during or after coupling of the kingpin to the fifth wheel coupling, the tractor-trailer combination of which further comprises a coupling device for coupling the coupling pieces to each other, the coupling device comprising coupling means for coupling the coupling pieces to each other if they are positioned directly or almost directly opposite each other, which coupling device further comprises displacement means for, when the tractor and trailer are positioned at an angle to each other, bringing the coupling pieces directly or at least almost directly opposite each other, based on the measured position of the trailer relative to the tractor, which displacement means comprise a circular arc-shaped rail the centre of which is located at the kingpin, along which circular arc-shaped rail one of the coupling pieces is movable.

### Background of the invention

A tractor-trailer combination according to the preamble of claim 1 is known from WO2013/180562A1. In this known combination, the marking on the underside of the kingpin is formed by a magnet, and the sensor is equipped with a coil for detecting the position of the magnet and thus the angle between the tractor and the trailer. When the tractor and the trailer are coupled, lines (for example, pneumatic lines for operating the brakes and electrical lines for switching lights on/off) from the tractor can be connected to lines from the trailer. For this purpose, the tractor is equipped with a circular rail connected to the tractor and along which a coupling piece can be moved. This coupling piece can be connected to a further coupling piece under the trailer by moving the coupling piece vertically. This movement can be achieved by rotating the rail around a horizontal axis through both ends of the rail. In practice, it has been found that there is a high risk of damage to the lines on the tractor during the coupling of the tractor to the trailer.

### Summary of the invention

An object of the invention is to provide a tractor-trailer combination of the type described in the preamble of claim 1, in which the risk of damage to the lines is lower than with the known tractor-trailer combination. To this end, the tractor-trailer combination according to the invention is characterized in that:
- the arc-shaped rail is located on the underside of the trailer and is connected to the trailer, whereby the coupling piece of the trailer is movable along the arc-shaped rail and the coupling piece of the tractor is fixed against the bottom of the fifth wheel,
- the displacement means are located on the trailer,
- the tractor and trailer are equipped with signal transmission means for controlling the displacement means present on the trailer, such that the coupling piece on the trailer is brought opposite the coupling piece on the tractor,
- the arc-shaped rail is fixed relative to the trailer,
- the arc-shaped rail and the coupling pieces, in the coupled position, are located at a level below the fifth wheel, and
- during coupling, the coupling means move the coupling pieces in a straight line and perpendicular to a tangent to the arc-shaped rail and in a horizontal direction towards each other.

By placing the rail with the movable coupling piece on the trailer, the lines on the tractor can be stationary installed in a location where there is no risk of damage, or at least a much lower risk than if the lines had to be movable to follow the coupling piece that moves along the rail, as is the case with the well-known tractor-trailer combination.

Because the circular arc-shaped rail and the coupling pieces are located at a level below the fifth wheel, the lines to the coupling piece located against the bottom of the fifth wheel can be routed under the fifth wheel, where the risk of damage is minimal.

By using the position of the kingpin relative to the fifth wheel, measured by the already present sensor, the coupling pieces can be brought straight in front of each other, after which they can easily be connected by moving one of the coupling pieces in a straight line towards the other coupling piece.

DE 10 2022 210 011 A1 discloses a tractor-trailer combination equipped with a coupling device for connecting electrical wiring on the tractor to wiring on the trailer. The trailer is equipped with a rail along which a coupling piece can be moved. When moving along the rail, this coupling piece connects to the stationary coupling piece on the tractor, because the latter is located in the path of the rail after the trailer is connected to the tractor. The coupling piece on the tractor is therefore located next to and above the fifth wheel, not underneath it. This increases the risk of damage compared to the tractor-trailer combination according to the invention.

US 7 793 966 B2 discloses a tractor-trailer combination in which the coupling pieces are aligned directly opposite each other by placing the coupling piece on the tractor unit under a V-shaped element that rotates around the kingpin and fits snugly into the V-shaped recess in the fifth wheel. The coupling piece on the trailer is not movable along a rail, but rotates around the kingpin. During coupling, the V-shaped element on the trailer will come into contact with the boundary walls of the V-shaped recess of the fifth wheel, causing the V-shaped element on the trailer to rotate. The lines on the tractor unit are also located under the fifth wheel. This coupling method causes friction between the V-shaped element on the trailer and the fifth wheel, making these parts subject to wear.

An embodiment of the tractor-trailer combination according to the invention is characterized in that, during coupling, the coupling means move the coupling piece on the trailer toward the coupling piece on the tractor unit, in a direction toward the center of the arc-shaped rail. This means that all the displacement means (those for moving the coupling piece along the rail and those for moving the coupling piece for coupling with the other coupling piece) are located on the trailer, so they do not require any space on the tractor unit.

A further embodiment of the tractor-trailer combination according to the invention is characterized in that, in the coupled position of the tractor unit with the trailer, with the top of the fifth wheel coupling in contact with the underside of the trailer, the distance between the arc-shaped rail and the underside of the trailer is equal to the distance between the coupling piece located under the fifth wheel and the top of the fifth wheel. This allows the coupling piece on the trailer to be coupled to the coupling piece located under the fifth wheel after the coupling piece has been moved directly in front of the coupling piece.

### Brief description of the drawings

The invention will be explained in more detail below using an exemplary embodiment of the tractor-trailer combination according to the invention, shown in the drawings. In the drawings:
Figure 1 shows a tractor-trailer combination in top view, with the tractor unit coupled to the trailer and positioned directly in front of the trailer;
Figure 2 shows the tractor-trailer combination in top view, but now with the tractor unit and the trailer at an angle to each other;
Figure 3 shows the tractor-trailer combination in side view;
Figure 4 shows an enlarged detail of the tractor-trailer combination shown in Figure 3; and
Figure 5 shows an enlarged detail of the tractor-trailer combination shown in Figure 2.

### Detailed description of the drawings

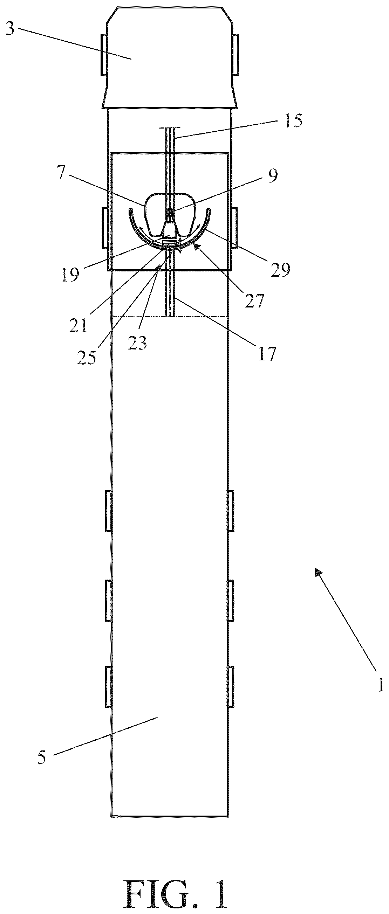

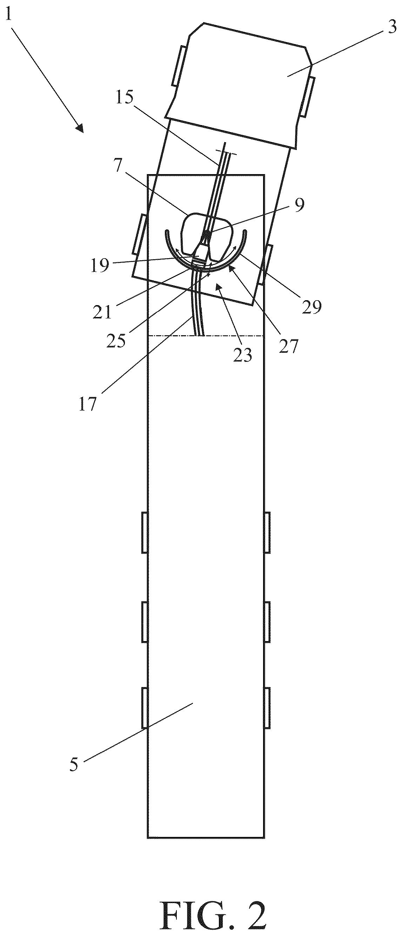

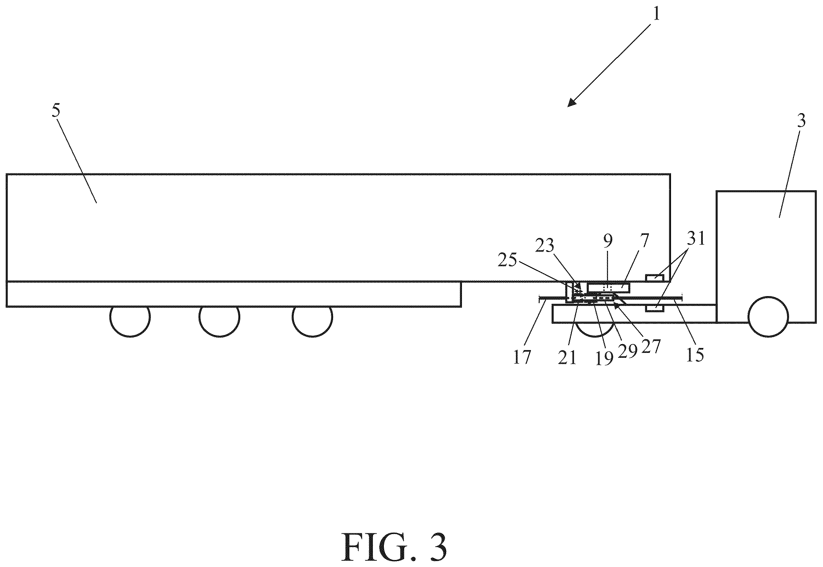

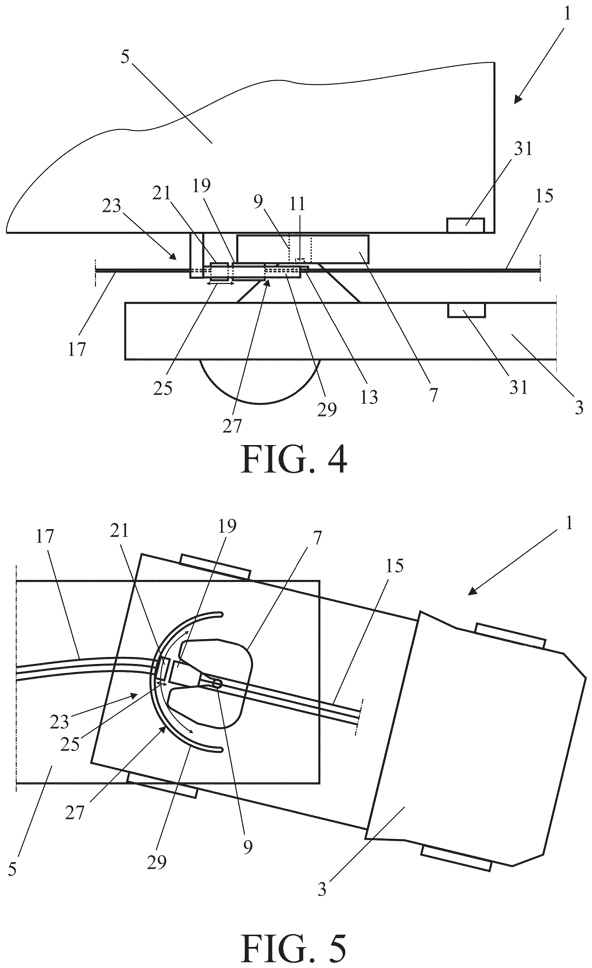

Figures 1-3 show an embodiment of the tractor-trailer combination 1 according to the invention. The tractor-trailer combination 1 consists of a tractor unit 3 and a trailer 5. The tractor unit 3 has a fifth wheel 7, and the trailer 5 has a kingpin 9 connected to the fifth wheel 7. The kingpin 9 is provided with a marking 11 on its underside, see Figure 4. The tractor unit 3 also has a sensor 13 located beneath the kingpin 9 for determining the position of the marking 11 relative to the fifth wheel 7, in order to determine the relative angular position of the trailer 5 relative to the tractor unit 3. The tractor unit 3 and the trailer 5 are equipped with lines 15 and 17 connected to coupling pieces 19 and 21. These coupling pieces are connected to each other during or after coupling the kingpin 9 to the fifth wheel 7.

The tractor-trailer combination 1 also has a coupling device 23 for connecting the coupling pieces 19 and 21. This coupling device 23 has coupling means 25 (schematically shown with an arrow) for connecting the coupling pieces 19 and 21 when they are positioned directly or almost directly opposite each other. The coupling device 23 also has displacement means 27 for bringing the coupling pieces 19 and 21 directly or at least almost directly opposite each other when the tractor 3 and the trailer 5 are positioned at an angle to each other.

The tractor 3 and the trailer 5 are equipped with signal transmission means 31 for controlling the displacement means 27 on the trailer 5, such that the coupling piece 21 on the trailer 5 is positioned opposite the coupling piece 19 on the tractor 3. During coupling, the coupling means 25 move the coupling piece 19 on the trailer 5 towards the coupling piece 19 positioned underneath the fifth wheel 7, in a direction towards the center of the arc-shaped rail 29.

The displacement means 27 have an arc-shaped rail 29 along which the coupling piece 21 can be moved. The center of this rail is located at the kingpin 9, see Figure 5. The arc-shaped rail 29 is connected to the underside of the trailer 5, see Figure 4. Based on the measured position of the trailer 5 relative to the tractor unit 3, the coupling piece 21 is moved along the arc-shaped rail 29. When the tractor unit 3 is coupled to the trailer 5, the top of the fifth wheel 7 comes into contact with the underside of the trailer 5. The distance between the arc-shaped rail 29 and the underside of the trailer 5 is equal to the distance between the coupling piece 19 located under the fifth wheel 7 and the top of the fifth wheel 7. This allows the coupling piece 21 located on the trailer 5 to couple to the coupling piece 19 located under the fifth wheel 7 after the coupling piece 21 has been moved directly in front of the coupling piece 19.

Although the invention has been explained above with reference to the drawings, it should be noted that the invention is by no means limited to the embodiment shown in the drawings. The invention also extends to all embodiments deviating from the embodiment shown in the drawings, within the scope defined by the claims.

## Claims

1. Tractor-trailer combination (1), the tractor (3) of which comprises a fifth wheel (7) and the semi-trailer (5) comprises a kingpin (9) which can be coupled to the fifth wheel (7) and is provided with a marking (11) on the underside, the tractor (3) further comprising a sensor (13) for determining the position of the marking (11) relative to the fifth wheel (7) for the purpose of determining the relative angular position of the semi-trailer (5) relative to the tractor (3), and the tractor (3) and the semi-trailer (5) being provided with lines (15, 17) which are connected to coupling pieces (19, 21) which are connected to each other during or after coupling of the kingpin (9) to the fifth wheel (7), which tractor-trailer combination (1) further comprising a coupling device (23) for coupling the coupling pieces (19, 21) to each other, which coupling device (23) comprises coupling means (25) for coupling the coupling pieces (19, 21) to each other when they are positioned directly or almost directly opposite each other, which coupling device (23) further comprises displacement means (27) for, when the tractor (3) and semi-trailer (5) are positioned at an angle to each other, bringing the coupling pieces (19, 21) directly or at least almost directly opposite each other, on the basis of the measured position of the semi-trailer (5) relative to the tractor (3), which displacement means (27) comprise a circular arc-shaped rail (29) the centre of which is located at the kingpin (9), along which circular arc-shaped rail (29) one of the coupling pieces (21) is movable, **characterized in that**:
- the circular arc-shaped rail (29) is located on the underside of the semi-trailer (5) and is connected to the semi-trailer (5), whereby the coupling piece (21) of the semi-trailer (5) is movable along the circular arc-shaped rail (29) and the coupling piece (19) of the tractor (3) is fixed against the bottom of the fifth wheel (7),
- the displacement means (27) are present on the semi-trailer (5),
- the tractor (3) and semi-trailer (5) are equipped with signal transmission means (31) for controlling the displacement means (27) present on the semi-trailer (5), such that the coupling piece (21) present on the semi-trailer (5) is brought opposite the coupling piece (19) present on the tractor (3),
- the circular arc-shaped rail (29) is fixed relative to the semi-trailer (5),
- the circular arc-shaped rail (29) and the coupling pieces (19, 21) are present at a level below the fifth wheel (7) in the coupled position, and
- the coupling means (25) move the coupling pieces (19, 21) in a straight line and perpendicular to a tangent to the circular arc-shaped rail (29) and in a horizontal direction towards each other during coupling.

2. Tractor-trailer combination according to claim 1, **characterized in that** the coupling means (25) move the coupling piece (19) on the trailer (5) towards the coupling piece (19) on the tractor (3) in a direction towards the centre of the circular arc-shaped rail (29).

3. Tractor-trailer combination according to claim 1 or 2, **characterized in that** in the coupled position of the tractor (3) with the semi-trailer (5), with the top of the fifth wheel (7) in contact with the underside of the semi-trailer (5), the distance between the arc-shaped rail (29) and the underside of the semi-trailer (5) is equal to the distance between the coupling piece (19) located under the fifth wheel (7) and the top of the fifth wheel (7).
